Europäisches Patentamt

European Patent Office

Office européen des brevets

(19)

(11) Veröffentlichungsnummer: **0 154 304**
**A2**

(12) # EUROPÄISCHE PATENTANMELDUNG

(21) Anmeldenummer: 85102258.2

(22) Anmeldetag: 28.02.85

(51) Int. Cl.⁴: **H 04 M 3/22**
**H 04 Q 3/54**

(30) Priorität: 28.02.84 DE 3407227

(43) Veröffentlichungstag der Anmeldung:
11.09.85 Patentblatt 85/37

(84) Benannte Vertragsstaaten:
AT BE CH DE FR GB IT LI LU NL SE

(71) Anmelder: Siemens Aktiengesellschaft
Berlin und München Wittelsbacherplatz 2
D-8000 München 2(DE)

(72) Erfinder: Lybeer, Roger
Bung. Meirsonstraat 41
Destelbergen(BE)

(54) Verfahren für eine Fernmeldeanlage, insbesondere für eine Fernsprechnebenstellenanlage mit insbesondere wahlweisem, beschleunigtem Prüfablauf.

(57) Mittels der in der Steuereinrichtung empfangenen, der gewählten Kennzahl entsprechenden Kennung wird in Abhängigkeit einer in einem veränderbaren Datenspeicher zwischengespeicherten, als Ergebnis der sicherheitstechnischen Prüfung vorhandenen Fehlerkennung ein beschleunigter sicherheitstechnischer Prüfablauf nur für solche Prüfvorgänge eingeleitet, die der Fehlerart bzw. den Fehlerarten der unterschiedlichen Fehlerkennungen des letzten sicherheitstechnischen Prüfablaufs entsprechen.

EP 0 154 304 A2

./...

Croydon Printing Company Ltd.

FIG 1

SIEMENS AKTIENGESELLSCHAFt
Berlin und München

0154304

Unser Zeichen
VPA 84 P 1 1 6 6 E

Verfahren für eine Fernmeldeanlage, insbesondere für eine Fernsprechnebenstellenanlage, mit wahlweisem, beschleunigtem Prüfablauf.

Die Erfindung bezieht sich auf ein Verfahren für eine Fernmeldeanlage, insbesondere für eine Fernsprechnebenstellenanlage, mit Steuereinrichtungen, mit den Steuereinrichtungen zugeordneten veränderbaren und nicht veränderbaren Speichern und mit Vergleichsschaltmitteln für die wahlweise Abwicklung von vermittlungstechnischen Verbindungen und von in Zusammenhang mit einer Funktionszuteilung für die vermittlungstechnischen Vorgänge vorgesehenen Mitteln gesteuerten, sicherheitstechnischen Prüfvorgängen, wobei durch Übertragung einer entsprechenden Sonderkennzahl und/oder einer Sonderkennung zu entsprechenden Bewertungsmitteln einer Steuereinrichtung besondere Prüfvorgänge einleitbar sind.

Durch die deutsche Auslegeschrift DE-OS 31 30 125.8 ist bereits ein Verfahren zur Durchführung der Funktionsprüfung bekannt, bei dem einem veränderbaren Speicher ein Speicherplatz zugeordnet ist, dessen Speicherinhalt über eine periphere Einheit derart beeinflußbar ist, daß im Falle des normalwirksamen Anschlusses des Arbeitsspeichers an dem Datenübertragungsleitungsbündel der Fernmeldeanlage eine erste Information und im Falle für periphere Anschlußeinheiten durchzuführende Funktionsprüfungen eine andere zweite Information speicherbar ist, so daß anstelle des Arbeitsspeichers ein den Verfahrensablauf der Funktionsprüfung bestimmender Speicher wirksam an dem Datenübertragungsleitungsbündel angeschaltet wird. Die vorgenannte Ein- und Ausspeicherung der die Funktionsprüfung

Mt 1 Bo / 7.2.1984

einleitenden Information erfolgt durch einen von einer
eine Auswertung einer an einem berechtigten Anschluß,
beispielsweise Bedienungs- oder Prüfplatz, abgegebene
Kennzeichnung bzw. eines an zentraler Stelle erzeugten
Funktionsprüfungsbefehls auszuführenden Einrichtung abgegebenen Befehls. Hierdurch sind also durch Übertragung einer entsprechenden Sonderkennzahl und/oder einer
Sonderkennung zu entsprechenden Bewertungsmitteln einer
Steuereinrichtung andere Vorgänge als vermittlungstechnische Vorgänge steuerbar.

Die Aufgabe der vorliegenden Erfindung besteht darin,
in einfacher Weise anstelle einer im normalen Vermittlungsbetrieb ablaufenden sicherheitstechnischen Prüfung
in besonderen Fällen, beispielsweise nach einem Baugruppenaustausch, anstelle der verhältnismäßig langsam ablaufenden sicherheitstechnischen Prüfung eine schnelle
Prüfung des gesamten Systems durchzuführen, so daß eine
Wartungsperson sich ein schnelles Bild der gegebenenfalls noch vorhandenen aktuellen Fehler verschaffen
kann.

Dies wird dadurch erreicht, daß durch Bewertung der gewählten und von einer peripheren Einrichtung übertragenen Kennzahl anstelle einer während den vermittlungstechnischen Vorgängen ablaufenden, sicherheitstechnischen Prüfung besondere Prüfvorgänge dadurch steuerbar
sind, daß mittels der in der Steuereinrichtung empfangenen, der gewählten Kennzahl entsprechenden Kennung
in Abhängigkeit einer in der Steuereinrichtung in einem
veränderbaren Datenspeicher zwischengespeicherten, als
Ergebnis der sicherheitstechnischen Prüfung vorhandenen,
unterschiedlichen Fehlerkennung nur solche Prüfvorgänge
eingeleitet werden, die der Fehlerart bzw. den Fehlerarten der unterschiedlichen Fehlerkennungen des letzten sicherheitstechnischen Prüfungsablaufs entsprechen.

Hiermit ist es in einfacher Weise möglich wahlweise von einem normalen Prüfungsablauf auf einen schnellen Prüfungsablauf während dem normalen Vermittlungsbetrieb umzuschalten und die Beschleunigung des Prüfablaufs dadurch zu erreichen, daß nur solche Prüfvorgänge eingeleitet werden, die der Fehlerart bzw. den Fehlerarten der unterschiedlichen Fehlerkennungen des letzten sicherheitstechnischen Prüfungsablaufs entsprechen. Hierdurch wird der gesamte Prüfungsablauf in der Regel um den Faktor 10 verkürzt.

Gemäß einer weiteren Ausbildung der Erfindung erfolgt vor der Einleitung der besonderen Prüfvorgänge von der Steuereinrichtung eine Löschung der aufgrund der aktuellen Fehler vorhandenen Schaltzustände.

Hierdurch ist sichergestellt, daß nur solche Fehler dargestellt werden, die beispielsweise nach Austausch einer Baugruppe im System noch vorhanden sind.

Nachfolgend ist anhand der Zeichnungen ein Ausführungsbeispiel der Erfindung beschrieben.

In der FIG. 1 ist eine digitale Fernsprechnebenstellenanlage gezeigt, in der das erfindungsgemäße Verfahren anwendbar ist.

In der FIG. 2 ist eine analoge Anlage gezeigt, in der ebenfalls das erfindungsgemäße Verfahren anwendbar ist.

0154304

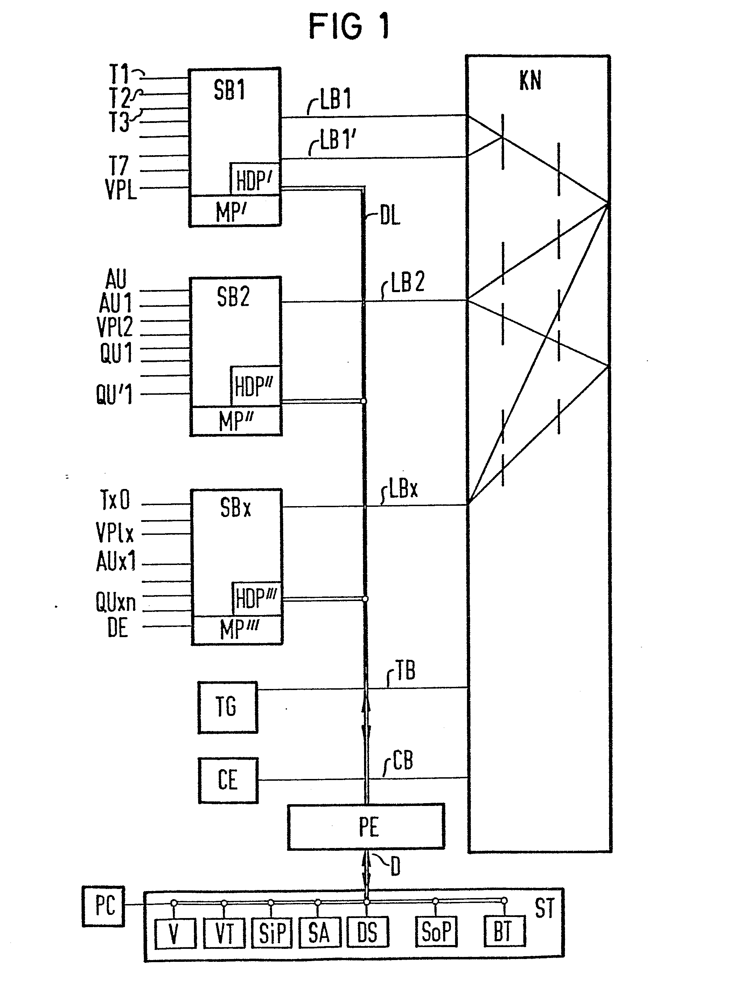

In der FIG. 1 ist eine digitale Fernsprechnebenstellenanlage mit als Beispiel drei Schnittstellenbaugruppen SB1 bis SBx gezeigt, an denen entweder beispielsweise sieben Teilnehmerstellen und ein Vermittlungsplatz VP2 bzw. Amtsübertragungen AU, AU1, ein Vermittlungsplatz VPL2 und Querverbindungsleitungen QU1 bis QU'1 bzw. Teilnehmerstellen TxO, ein Vermittlungsplatz VP1x, Amtsübertragungen AUx1 und Querverbindungsleitungsübertragungen QUxn, sowie auch Datenendgeräte DE anschaltbar sind. Jede der Schnittstellen ist über ein entsprechendes Leitungsbündel LB1 bzw. LB2 bzw. LBx mit dem Sprechwegekoppelnetzwerk KN und über das gemeinsame Datenübertragungsleitungsbündel DL mit der zentralen Steuereinrichtung ST verbunden. Letztere Verbindung verläuft über die periphere Einrichtung PE, in der gegebenenfalls Informationen, die nicht gleichzeitig in der Steuereinrichtung ST verarbeitbar sind, zwischengespeichert und auch gegebenenfalls umgesetzt werden. Über jedes der Leitungsbündel sind sowohl der Sprachübertragung entsprechenden Informationen als auch andere Daten im Pulscodemodulationsverfahren übertragbar. Der Informationsaustausch zwischen angeschalteten Endstellen, beispielsweise Teilnehmerstellen und Vermittlungsplätze, sowie auch angeschalteten Amtsleitungen, Querverbindungsleitungen und sonstigen Leitungen erfolgt über das Sprechwegekoppelnetzwerk KN. Hierbei ist zu erwähnen, daß über die Sprechwege nicht nur die Sprachinformationen, sondern auch sonstige Informationen und Daten im Pulscodemodulationsverfahren übertragbar sind. Über das Sprechwegekoppelnetzwerk sind auch zusätzliche, nur andeutungsweise dargestellte Einrichtungen wie Tongeneratoren TG, Codeempfänger CE und andere nicht dargestellte Einrichtungen, beispielsweise Dateneinrichtungen und Prüfschnittstellen anschaltbar.

Der Verbindungsaufbau läuft im Prinzip in der nachfolgend beschriebenen Weise ab. In einer Schnittstellenbaugruppe, z.B. SB1, wird erkannt, wenn ein Teilnehmer den Hörer abhebt. Dieser Teilnehmer wird über das Sprechwegekoppelnetzwerk mit einem Tongenerator TG und mit einem Codeempfänger CE verbunden. Mit den gewählten Ziffern wird der Verbindungswunsch über die peripheren Einrichtung PE der zentralen Steuereinrichtung ST mitgeteilt. Die Vollständigkeit einer Kennzahl und die entsprechende Berechtigung der anrufenden Teilnehmerstelle bzw. der ankommend belegten Verbindungsleitungsübertragung wird geprüft. Von der zentralen Steuereinrichtung wird, wie bei der Verbindungsherstellung zum Tongenerator TG und zum Codeempfänger CE auch der weitere Verbindungsaufbau zur anzurufenden Stelle gesteuert. Falls erforderlich werden Informationen der betreffenden Schnittstellenbaugruppe, z.B. SB1, in Abhängigkeit von Befehlen der zentralen Steuereinrichtung ST zu einer anderen Schnittstellenbaugruppe, z.B. SBx, über das Datenübertragungsleitungsbündel DL übertragen. Gegebenenfalls werden auch über das Sprechwegekoppelnetzwerk Daten von der einen Schnittstellenbaugruppe zur anderen Schnittstellenbaugruppe bzw. über die Verbindungsleitungsübertragungen weitergegeben. Hierdurch ist auch ohne zusätzliche Verbindungsleitungen ein Datenaustausch zu anderen Anlagen möglich. Bei der gezeigten Darstellung ist davon ausgegangen, daß den Teilnehmerendstellen bereits Umsetzeinrichtungen für die Umsetzung analoger Informationen in digitale Informationen und umgekehrt (sogenannte Codec) zugeordnet sind. Die weitere Funktionsanpassung erfolgt in den dargestellten Schnittstellenbaugruppen. Für die Umsetzung von analogen Signalen analoger Endstellen bzw. analoger Verbindungsleitungsübertragungen können der Schnittstellenschaltung der Schnittstellenbaugruppe auch entsprechende Umsetzschaltmittel (CODEC) zugeordnet werden.

Für die Übertragung der Sprachinformationen und der sonstigen Dateninformationen über das Sprechwegekoppelnetzwerk KN wird das Übertragungssystem PCM 30 verwendet.
Bei diesem Übertragungssystem müssen in jeder Richtung
innerhalb von 125 µs hintereinander 30 Codewörter mit
je 8-Bit übertragen werden. Zu diesen 30 Codewörtern
gehören zwei weitere 8-Bit-Informationen und zwar eine
für die Signalisierung und eine Information, die abwechselnd ein Rahmenkennungswort und ein Meldewort enthält. Die 30 Codewörter bilden zusammen mit den genannten, weiteren 2 x 8 Bit einen Pulsrahmen. Die Pulsrahmen
werden unmittelbar aneinandergereiht übertragen. Die Rahmenkennungswörter der Pulsrahmen synchronisieren Sende-
und Empfangsteile des PCM 30-Übertragungssystems.

Über das zu der zentralen Steuereinrichtung ST führende
Datenübertragungsleitungsbündel DL werden Informationen
in einem Nachrichtenformat mit variabler Datenlänge übertragen und zwar nach einem Hochpegel-Zeichengabeverfahren HDLC. Das Informationsformat ist dabei in der Länge
von 5 bis 32 Bytes variabel und enthält in der Regel
Adresse, Folgenummer, Prüfzeichen und die eigentliche
Nachricht.

In der zentralen Steuereinrichtung ST sind für die Verarbeitung der empfangenen Informationen und für die Zurückübertragung entsprechender Befehle mehrere, unterschiedliche Speicher und Verarbeitungseinrichtungen, wie Vergleicher und andere Schaltmittel vorhanden. Die einzelnen
zu der zentralen Steuereinrichtung ST gehörenden Speicher
und Einrichtungen sind nachfolgend in Zusammenhang mit
der Erläuterung des erfindungsgemäßen Verfahren näher beschrieben.

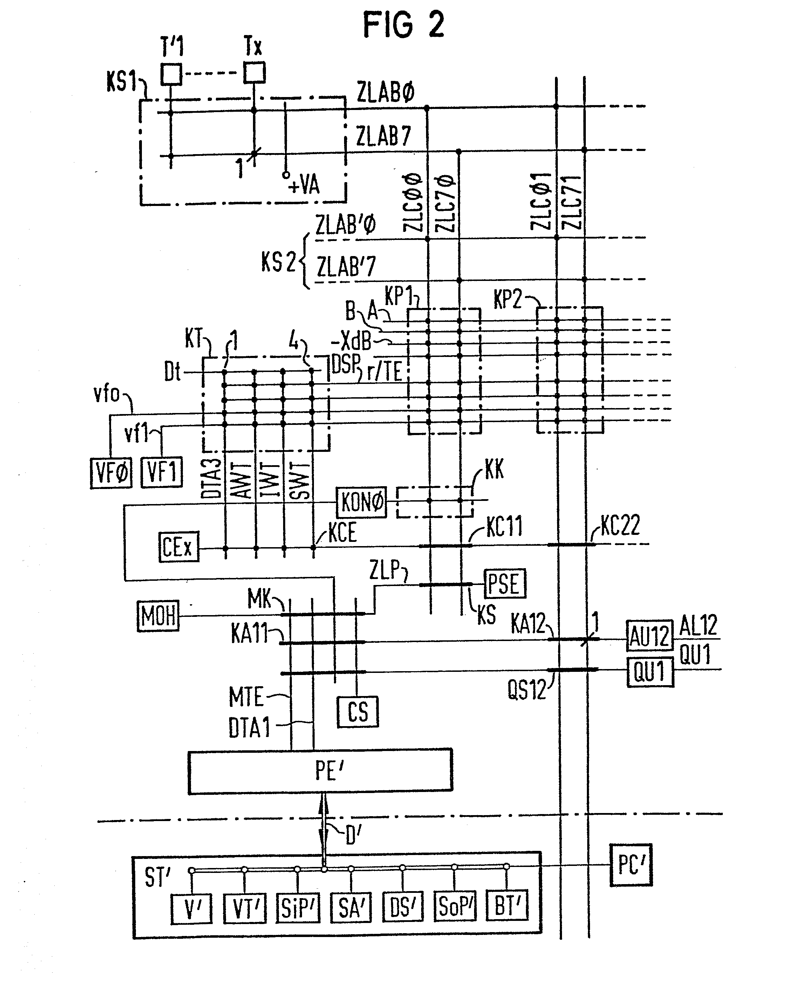

In der FIG. 2 ist eine Fernsprechnebenstellenanlage gezeigt die mit analogen Signalen betreibbar sein soll.

Bei dieser analogen Fernsprechnebenstellenanlage handelt
es sich um eine zentralgesteuerte Anlage, bei der der
zentralen Steuereinrichtung ST' eine nicht dargestellte
Wegesucheinrichtung und Schaltmittel zur Durchsteuerung
der durchzuschaltenden Koppelpunkte zugeordnet sind,
die in bekannter Weise arbeiten. Die im System vorhandenen
Koppler schalten die Sprechwege einadrig durch. Die Koppelpunkte selbst sind sogenannte elektronische Koppelpunkte, zum Beispiel CMOS-Bausteine. Bei der in FIG. 2
dargestellten Anlage sind als Endstellen Teilnehmerstellen T1 bis Tx an einer ersten Koppelstufe KS1 und sind
weitere nicht dargestellte Teilnehmerstellen und sonstigen Endstellen an weiteren nicht dargestellten Koppelstufen anschaltbar. Für die Koppelstufe KS1 sind die
Zwischenleitungen ZLABØ bis ZLAB7 und für eine weitere
nicht dargestellte Koppelstufe KS2 die Zwischenleitungen
ZLAB'Ø bis ZLAB'7 gezeigt. Die vorgenannten Zwischenleitungen führen zu parallelgeschalteten Kopplern von denen
als Beispiel nur zwei, KP1 und KP2, dargestellt sind.

Die Durchschaltung der Koppelpunkte erfolgt, wie bereits
erwähnt unter Zuhilfenahme der zentralen Steuereinrichtung ST'und der der zentralen Steuereinrichtung ST'
zugeordneten Wegesucheinrichtung. Sprechstellen unterschiedlicher Gruppen werden durch Betätigen jeweils
eines Koppelpunktes eines Kopplers, z.B. KS1,der einen
Gruppe und eines Koppelpunktes des Kopplers der anderen
Gruppe, z.B. KS2 für eine Sprechverbindung, über welche
auch sonstige Daten übertragen werden können, miteinander
verbunden. Eine Verbindung der Teilnehmerstelle Tx
mit einer Amtsübertragung, z.B. AU12, für die Herstellung einer Verbindung über die Amtsleitung AL12 erfolgt
beispielsweise durch Betätigen des Koppelpunktes KS1/1
des Kopplers KS1 und des Koppelpunktes KA12/1 des Kopplers KA12. Die Verbindung verläuft dann über die Zwischenleitun-

gen ZLAB7 und ZLC71. Für die Herstellung von Internverbindungen können beliebige Koppelpunkte in der Zeile
bzw. in der Spalte für die Verbindung entsprechender
Ein- und Ausgänge zur anrufenden bzw. zur angerufenen
Stelle betätigt werden. Beim Amtskoppler ist dagegen
jedem Ausgang fest eine Amtsübertragung zugeordnet,
die über einen der Eingänge d.h. über eine der Zwischenleitungen für abgehene Verbindungen und umgekehrt für
ankommende Verbindungen belegbar ist.

Für eine Verbindungsherstellung innerhalb der Fernsprechnebenstellenanlage und auch für die Weiterübertragung
von Wahlkennzeichen zum öffentlichen Amt ist die Anschaltung eins Codeempfängers, z.B. CEx, an der zu anrufenden
Teilnehmerstelle führenden Leitung erforderlich. Auch ist
die Anschaltung von Wahlkennzeichen zur anrufenden bzw.
angerufenen Teilnehmerstelle notwendig. Zu diesem Zwecke
sind entsprechende Koppler KC11 und KT in den Zwischenleitungen, die zu den Endstellen (Teilnehmerstellen, Vermittlungsstelle) und Verbindungsleitungsübertragungen,
Amtsübertragungen führen, eingefügt. Der Codeempfänger CEx
wird beispielsweise über den Koppler KC11 mit einer der
Endstellen und über den Koppler KC22 mit einer der Amtsübertragungen oder Querverbindungsleitungsübertragungen
verbunden. Die Anschaltung des Codeempfängers erfolgt
beispielsweise nach Abheben des Hörers an einer Teilnehmerstelle in Abhängigkeit entsprechender Steuerbefehle
der zentralen Steuereinrichtung ST'. Wählt eine Teilnehmerstelle eine Amtskennziffer, so erfolgt die Durchschaltung der anrufenden Teilnehmerstelle, z.B. Tx, durch
Betätigen eines entsprechenden Koppelpunktes KS1/1 des
der Teilnehmerstelle zugeordneten Kopplers KS1 zur Amtsübertragung, beispielsweise über den Koppelpunkt KA12/1
des Amtskopplers KA12. Für die Aufnahme der über die Amtsübertragung zu empfangenen Wahlkennzeichen ger wird beispielsweise anstelle über den Koppler KC11 jetzt über den Koppler KC22 dieser Codeempfänger CEx an die entsprechende durch die Amtsübertragung belegte Zwischenleitung ZLC71 angeschaltet. Im Koppler KA12 ist für die Durchschaltung nur ein Koppelpunkt je Zeile gleichzeitig durchschaltbar.

Die Anschaltung der Hörsignale, d.h. der Hörtöne, erfolgt teilweise über einen der Koppler KP1 bis KP2 und teilweise über den Koppler KCE, der in den Zwischenleitungen eingefügt ist, über die die Codeempfänger angeschaltet werden. Über den Koppler KCE werden die Töne angeschaltet, die in Zusammenhang stehen mit der Wahl, also während der Anschaltezeit der Codeempfänger. So wird beispielsweise über die Leitung SWT ein Sonderwählton, über die Leitung IWT der interne Wählton, über die Leitung AWT der Amtswählton und über die Leitung DTA3 ein Dauerton angeschaltet. Der Rhythmus der Töne wird durch Öffnen und Schliessen der Koppelpunkte KT1 bis 4 des Kopplers KT bestimmt. Über die Koppelpunkte KT1 bis 4 des Kopplers KT, denen ein Dauerton für die erstgenannten drei Wähltonarten zugeführt wird steuert die zentrale Steuereinrichtung ST' den Takt. Der Koppler KCE für die Anschaltung der Wähltöne vereinfacht das Anschalteverfahren und reduziert die Anzahl notwendiger Koppelpunkte in den Kopplern KP1, KP2. Über die Koppler KP1, KP2 werden andere Töne, beispielsweise der Besetztton über die Ader B der Aufschalteton über die Ader A angeschaltet. Über die Zwischenleitung DSP werden Potentiale für die Durchschalteprüfung der Koppelpunkte angeschaltet. Über den Anschluß HTE ist ein Hörzeichen anschaltbar um eine Prüfung der angeschalteten Endstelle bzw. der angeschalteten Übertragung beispielsweise durch Spiegelung der Signale vorzunehmen. Über die Zwischenleitungen vf0 und vf1 sind Vermittlungsplätze VF0 und VF1 an den Verbindungswegen zu den Endstellen und Leitungs- übertragungen anschaltbar. Diesen Vermittlungsplätzen können über den Koppler KT unmittelbar Wähltöne zugeleitet werden.

Der Codesender CS überträgt über die entsprechenden Koppler KA12, QS12 Mehrfrequenzcodezeichen als Wahlkennzeichen zu angeschalteten Verbindungsleitungen, d.h. Amtsleitungen bzw. Querverbindungsleitungen und zwar erfolgt diese Übertragung in Abhängigkeit des über die jeweilige Verbindungsleitung übertragenen Wahlbereitschaftskennzeichens, d.h. des übertragenen Wählzeichens aus der Gegenanlage. Die Überwachung des Empfangs eines derartigen Hörzeichens als Wahlbereitschaftskennzeichen erfolgt über die Ader HTE durch die zentrale Steuerung.

Über einen weiteren Koppler KS ist eine Personensucheinrichtung mit den Endstellen über die entsprechenden Koppelpunkte anschaltbar. Ferner ist eine zusätzliche Einrichtung MOH für die Anschaltung besonderer Hörzeichen, beispielsweise auch von Musik während eins Wartzustandes vorgesehen. Eine Herstellung von Konferenzverbindungen ist über den Koppler KK und über entsprechende Konferenzsätze KONØ möglich.

Aus dem vorstehenden geht hervor, daß in den Zwischenleitungen die Spalten der zusätzlichen Koppler geschaltet sind. Die Zeilen dieser Koppler sind entweder direkt mit den genannten zusätzlichen Einrichtungen bzw. über weitere zusätzliche Koppler direkt mit anderen Einrichtungen, beispielsweise Vermittlungsplätze und Codeempfänger verbunden, wobei aber über die zusätzlichen Koppler zusätzliche Informationen, beispielsweise in Rhythmus anschaltbare Töne bzw. andere Informationen, auch Musik während des Wartezustandes, anschaltbar sind.

Die der zentralen Steuereinrichtung ST' zugeordneten Speicher und Zusatzeinrichtungen werden nachfolgend bei der Beschreibung des erfindungsgemäßen Verfahrens näher erläutert.

Die Steuereinrichtungen ST nach FIG. 1, ST' nach FIG. 2 enthalten, wie vorstehend bereits erwähnt, mehrere unterschiedliche Speicher, die als veränderbare und nicht veränderbare Speicher für die Abwicklung von vermittlungstechnischen Verbindungen und auch für die Abwicklung von anderen Vorgängen als vermittlungstechnische Vorgänge dienen. In den veränderbaren Speichern werden die jeweiligen Zustandsinformationen für die Verarbeitung in der zentralen Steuereinrichtung ST bzw. ST' in bekannter Weise zwischengespeichert. In den nicht veränderbaren Speichern sind die Informationen gespeichert, die jeweils den Verfahrensablauf in der Anlage bestimmen. Sie sind spezifisch für die jeweilige Anlage. Mit DS bzw. DS' ist jeweils der Datenspeicher bezeichnet, in den die veränderbaren Kundendateninformationen und die veränderbaren Informationen, die die Dienste und Sonderfunktionen der Fernsprechnebenstellenanlage bestimmen gespeichert. In diesen veränderbaren Datenspeichern können auch die als Ergebnis sich ergebenden Informationen einer sicherheitstechnischen Prüfung zwischengespeichert werden. Eine solche Zwischenspeicherung kann erforderlich sein um bei Fehlererkennung eine Auswertung in der Weise vorzunehmen, daß nur bei solchen Prüfvorgängen unterschiedliche Fehlerkennungen eingeleitet werden, die der Fehlerart bzw. den Fehlerarten der unterschiedlichen Fehlerkennungen in einem letzten sicherheitstechnischen Prüfablauf entsprechen. In den erwähnten Datenspeicher DS sind auch solche veränderbare Informationen gespeichert, die die Funktionszuteilung zu einer Teilnehmerstelle kennzeichnen. So kann beispielsweise eine erste Funktionskennung, die in Zuordnung zu einer Kennung einer entsprechenden Teilnehmerstelle in diesem Speicher DS vorhanden ist, die Zuteilung einer Sekretärfunktion festlegen. Einer anderen Teilnehmerstelle kann durch Zuordnung
entsprechender Kennungen die Cheffunktion zugeteilt werden.

Der zentralen Steuereinrichtung ST bzw. ST' sind auch Vergleichsschaltmittel V bzw. V' zugeordnet, welche die eingehenden Informationen mit vorhandenen, bestimmten Vermittlungszuständen bzw. bestimmten Teilnehmerstellen zugeordneten Informationen vergleichen und dementsprechend
die Abgabe von Steuerbefehlen beeinflussen. Zusätzliche
Schaltmittel SA bzw. SA' dienen dazu zusätzliche Funktionsabläufe nachträglich in die Fernsprechnebenstellenanlage einzubringen. Der zentralen Steuereinrichtung ST
bzw. ST' sind auch Schaltmittel VT und BT bzw. VT' und
BT' zugeordnet, die die vermittlungstechnischen bzw. den
betriebstechnischen Vorgänge betreffen. Die vermittlungstechnischen Vorgänge beziehen sich auf die Herstellung
und Auslösung von vermittlungstechnischen Sprechverbindungen und Verbindungen für Datenübertragung, während
sich die betriebstechnischen Vorgänge auf Vorgänge beziehen, die dazu dienen die Fernsprechnebenstellenanlage
vor der Einschaltung bzw. auch nach der Einschaltung in
einer bestimmten Weise hinsichtlich des Verfahrensablaufes
bzw. der Dienste und Zusatzfunktionen einzurichten bzw. zu
verändern. Hierzu gehören beispielsweise die Zuteilung von
Berechtigungen, die Einrichtung von Sonderfunktionen und
Diensten, wie beispielsweise Aufschalten, Sammelanschluß,
Konferenzteilnehmer, Sekretär-/Cheffunktion und auch die
Zuteilung von für bestimmte Funktionsabläufe zu wählenden
Kennzahlen. Ferner sind der Steuereinrichtung ST bzw. ST'
Schaltmittel SiP bzw. SiP' für die Einleitung und Durchführung einer Sicherheitsprüfung zugeordnet. Für die Aufnahme und Auswertung von Steuerbefehlen einer Bedienungsstation bzw. einer Vermittlungsstation sind der Steuereinrichtung ST bzw. ST' ebenfalls besondere Schaltmittel
BT bzw. BT' zugeordnet.

Im vorliegenden Falle wird angenommen, daß die Übertragung einer Sonderkennzahl und/oder einer Sonder-kennung von einer Vermittlungsstation bzw. von einer Bedienungsstation, die entsprechend der in Fig. 2 bzw. in Fig. 2 beschriebenen Beispiele in der Anlage an den Übertragungsweg anschaltbar bzw. welche von einem peripheren Gerät PG bzw. PG' zu Bewertungsmitteln der Steuereinrichtung ST bzw. ST' zur Einleitung anderer Vorgänge als vermittlungstechnische Vorgänge übertragbar sind. Bei diesen anderen Vorgängen handelt es sich um betriebstechnische Vorgänge, die beispielsweise vor der Einschaltung einer Anlage bzw. danach notwendig sind um kundenspezifische Informationen einzugeben bzw. zu ändern. Entsprechend der in der deutschen Offenlegungsschrift DE-OS 31 30 125.8 beschriebenen Weise erfolgt mit der Übertragung der Sonderkennzahl und/oder der Sonderkennung eine Umschaltung von den vermittlungstechnischen Vor-gängen auf die anderen Vorgänge beispielsweise in der Weise, daß an zentraler Stelle eine Information speicherbar ist, um sicherzustellen, daß der jeweils ab-zuwickelnde Verfahrensablauf entweder für vermitt-lungstechnische Vorgänge oder für andere als vermitt-lungstechnische Vorgänge steuerbar ist. Im vorliegenden Falle ist angenommen, daß der zentralen Steuerung ST bzw. ST' besondere Mittel VT bzw. VT' (in Fig. 1 bzw. Fig. 2) zugeordnet sind, welche die vorgenannte Sonderkennzahl und/oder Sonderkennung, welche seitens der Vermittlungsstation des Vermittlungsplatzes, der Bedienungsstation VP1 bzw. VFO bzw. PG bzw PG' gesendet wurde, bewertet wird, so daß eine Umschaltung vom vermittlungstechnischen Vorgang auf einen betriebstechnischen Vorgang erfolgt. Hierzu wird in der Steuereinrichtung ST bzw. ST' eine entsprechende Kennung, beispielsweise in einem Speicher der genannten Mittel VT bzw. VT' aufgenommen und bei der Einleitung jedes vermittlungstechnischen bzw. betriebstechnischen Vorgangs abgefragt.

Im vorliegenden Falle besteht weiterhin die Möglichkeit auch während vermittlungstechnischer Vorgänge eine sicherheitstechnische Prüfung aller Funktionen der Anlage durchzuführen. Für die Einleitung der sicherheitstechnischen Prüfung ist von einem Vermittlungsplatz VPL bzw. von einer Bedienungsstation VFO bzw. von einem peripheren Gerät PG aus eine besondere Kennzahl zu wählen, die von der zentralen Steuerung bewertet wird. Seitens der Zentralsteuereinrichtung wird dann aufgrund der empfangenen, der gewählten Kennzahl entsprechenden Kennung in Abhängigkeit einer in der Steuereinrichtung ST bzw. ST' in einem veränderbaren Datenspeicher DS bzw. DS' (in Fig. 1 bzw. in Fig. 2) zwischengespeicherten, als Ergebnis der sicherheitstechnischen Prüfung vorhandenen, unterschiedlichen Fehlerkennung nur solche Prüfvorgänge eingeleitet, die der Fehlerart bzw. den Fehlerarten der unterschiedlichen Fehlerkennungen des letzten sicherheitstechnischen Prüfungsablauf entsprechen. Die Informationen hinsichtlich des letzten sicherheitstechnischen Prüfungsablaufs sind in einem entsprechenden Bereich eines veränderbaren Datenspeichers, beispielsweise des veränderbaren Datenspeichers DS bzw. DS' zwischengespeichert.

Dadurch, daß nur solche Prüfungen vorgenommen werden, die zurückgehen auf eine Fehlerart bzw. auf Fehlerarten der unterschiedlichen Fehlerkennungen des letzten sicherheitstechnischen Prüfungsablaufs kann die zeitliche Dauer der sicherheitstechnischen Prüfung gezielt verkürzt werden. Die Verkürzung kann bis zum Faktor 10 betragen. Damit ist es möglich, beispielsweise nach dem Austauschen einer Baugruppe eine schnelle Überprüfung des Systems durchzuführen, um festzustellen ob die im letzten sicherheitstechnischen Prüfungsablauf festgestellten Fehler mit dem Ersetzen der Baugruppe behoben sind. Um den beschleunigten Prüfungsablauf nicht zu stören, sind mit dem Start der Schnellprüfung die aktuellen Fehler im System zu löschen. In der zentralen Steuerung ist sichergestellt, daß nach einmaligem, schnellen Prüfungsablauf die vorhandene Sicherheitstechnik selbsttätig wieder auf den normalen Prüfungsablauf aller Funktionen umgestellt wird.

An dem einleitenden Vermittlungsplatz bzw. an der einleitenden Bedienungsstation flackert eine Signallampe für die Dauer des schnellen sicherheitstechnischen Prüfungsablaufs. Sobald die Signalisierung erlischt, kann das Ergebnis des Prüfungsablaufs abgefragt und ausgedruckt werden. Die Abfrage erfolgt durch Wahl einer entsprechenden Kennzahl.

Aus dem vorstehenden geht hervor, daß vor der Einleitung der besonderen Prüfvorgänge von der Steuereinrichtung ST bzw. ST' eine Löschung der aufgrund der akutellen Fehler vorhandenen Schaltzustände erfolgt. Ferner ist entnehmbar, daß für die Dauer der besonderen Prüfvorgänge über die Steuerung einer Signalisierung an der einleitenden, peripheren Stelle, z.B. T1, einschaltbar ist. Auch ist entnehmbar, daß durch Abschaltung der Signalisierung am Ende des schnellen, sicherheitstechnischen Prüfablaufs eine Wiedergabe des Ergebnisses der abgeschlossenen besonderen Prüfvorgänge durch eine Schaltmaßnahme, beispielsweise durch Kennzahlwahl, an der peripheren Stelle, z.B. T1, abfragbar ist. Auch ist entnehmbar, daß vor Einleitung des schnellen, sicherheitstechnischen Prüfablaufs, solche bei dem sicherheits-

**0154304**

technischen Prüfablauf als fehlerhaft gekennzeichneten
Baugruppen der Fernmeldeanlage gegen andere austauschbar
sind.

5 Patentansprüche

2 Figuren

Patentansprüche

1. Verfahren für eine Fernmeldeanlage, insbesondere für eine Fernsprechnebenstellenanlage, mit Steuereinrichtungen, mit den Steuereinrichtungen zugeordneten veränderbaren und nicht veränderbaren Speichern und mit Vergleichsschaltmitteln für die wahlweise Abwicklung von vermittlungstechnischen Verbindungen und von in Zusammenhang mit einer Funktionszuteilung zu für vermittlungstechnische Vorgänge vorgesehenen Mitteln gesteuerten, sicherheitstechnischen Prüfvorgängen, wobei durch Übertragung einer entsprechenden Sonderkennzahl und/oder einer Sonderkennung zu entsprechenden Bewertungsmitteln einer Steuereinrichtung besondere Prüfvorgänge einleitbar sind, d a d u r c h   g e k e n n z e i c h - n e t , daß durch Bewertung der gewählten und von einer peripheren Einrichtung (beispielsweise Vermittlungsplatz VP1) übertragenen Kennzahl anstelle einer während den vermittlungstechnischen Vorgängen ablaufenden, sicherheitstechnischen Prüfung besondere Prüfvorgänge dadurch steuerbar sind, daß mittels der in der Steuereinrichtung (ST) empfangenen, der gewählten Kennzahl entsprechenden Kennung in Abhängigkeit einer in der Steuereinrichtung (ST) in einem veränderbaren Datenspeicher (DS) zwischengespeicherten, als Ergebnis der sicherheitstechnischen Prüfung vorhandenen, unterschiedlichen Fehlerkennung nur solche Prüfvorgänge eingeleitet werden, die der Fehlerart bzw. den Fehlerarten der unterschiedlichen Fehlerkennungen des letzten sicherheitstechnischen Prüfungsablaufs entsprechen.

2. Verfahren für eine Fernmeldeanlage nach Anspruch 1, d a d u r c h   g e k e n n z e i c h n e t , daß vor der Einleitung der besonderen Prüfvorgänge von der Steuereinrichtung (ST) eine Löschung der aufgrund der aktuellen Fehler vorhandenen Schaltzustände erfolgt.

0154304

3. Verfahren für eine Fernmeldeanlage nach Anspruch 1, d a d u r c h  g e k e n n z e i c h n e t , daß für die Dauer der besonderen Prüfvorgänge über die Steuerung eine Signalisierung an der einleitenden, peripheren Stelle (T1) einschaltbar ist.

4. Verfahren für eine Fernmeldeanlage nach Anspruch 3, d a d u r c h  g e k e n n z e i c h n e t , daß durch Abschaltung der Signalisierung am Ende der besonderen Prüfvorgänge eine Wiedergabe des Ergebnisses der abgeschlossenen besonderen Prüfvorgänge durch eine Schaltmaßnahme an der peripheren Stelle (T1) abfragbar ist.

5. Verfahren für eine Fernmeldeanlage nach einem der vorangehenden Patentansprüche 1 bis 4, d a d u r c h  g e k e n n z e i c h n e t , daß vor Einleitung der besonderen Prüfvorgänge solche bei dem sicherheitstechnischen Prüfablauf als fehlerhaft gekennzeichneten Baugruppen der Fernmeldeanlage gegen andere austauschbar sind.

1/2

FIG 1

2/2

FIG 2

0154304